# FASCICULE DE BREVET EUROPEEN

(11) **EP 1 886 586 B1**
(45) Date de publication et mention de la délivrance du brevet: **17.02.2010**
(21) Numéro de dépôt: 07290875.9
(22) Date de dépôt: 11.07.2007
(51) Int. Cl.: A23L 3/005, A23L 3/01, A23L 1/01, A23L 1/025, A23L 3/18, A23L 3/22

(54) **Systeme de chauffage ohmic avec circulation par vis sans fin**
Ohmic heating system with circulation by augers
Ohmic heating system with circulation by augers

(30) Priorité: 24.07.2006 FR 0606761
(43) Date de publication de la demande: 13.02.2008
(73) Titulaire: Campbell Soup Company, Camden NJ 08103-1799 (US)
(72) Inventeur: Dock, Guillaume, 84510 Caumont sur Durance (FR)
(74) Mandataire: Breese, Pierre

(56) Documents cités:
- EP-A2- 0 141 657
- WO-A-89/00384
- JP-A- 1 202 276
- JP-A- 4 183 375
- JP-A- 56 005 076
- JP-A- 2002 238 523
- JP-A- 2003 317 900
- JP-A- 2004 055 199
- JP-A- 2004 290 094
- SU-A1- 1 669 420
- SU-A1- 1 697 704

## Description

La présente invention concerne un appareil de chauffage ohmique de compositions alimentaires, notamment de soupes.

Dans l'industrie agroalimentaire, le chauffage ohmique est développé en ce qui concerne le chauffage des aliments liquide ou solide. En effet, cette technique permet une montée en température rapide préservant les qualités organoleptiques des aliments. Le chauffage ohmique peut être utilisé pour la stérilisation des aliments.

Le chauffage ohmique permet un chauffage des aliments par le passage d'un courant électrique. La résistance du produit à la circulation de l'électricité provoque l'élévation de la température.

Cette technique de chauffage par effet Joule est bien connue. On connaît ainsi, les dispositifs de chauffage ohmique comprenant un canal central tubulaire aux deux extrémités duquel sont placées des électrodes, percées pour permettre l'introduction d'un fluide dans le tube et sa collecte. Les colonnes utilisées sont en général composées d'un tube en matériau isolant (verre pyrex ou plastique) dans lequel circule le produit à chauffer entre les deux électrodes. Ces deux électrodes sont à la fois perpendiculaires au canal et à la direction générale d'écoulement du fluide.

À titre d'exemple, le brevet japonais 2004-290094 décrit une installation pour la stérilisation de produits alimentaires comprenant un premier tube de préchauffage, alimenté par une pompe, la sortie de ce premier tube de préchauffage débouchant dans un second tube à chauffage ohmique.
Un des problèmes rencontrés dans l'utilisation du chauffage ohmique pour le traitement thermique des aliments à gros morceaux comme les potages ou les plats cuisinés, est l'hétérogénéité du chauffage des composés contenus dans le produit alimentaire se traduisant par une sur cuisson de certains composés au détriment de leurs qualités organoleptiques.
Cette hétérogénéité de chauffage est liée en partie à une différence du temps de séjour de la phase liquide et des particules dans la colonne de chauffage ohmique. La maîtrise du temps de séjour des composés dans la colonne de chauffage ohmique nécessite une maîtrise du flux des aliments dans la colonne.
Dans la solution précitée, la phase liquide se déplace plus rapidement que les particules solides dans le premier tube puis dans la canalisation intermédiaire, puis dans le second tube. Pour tenir compte de ce phénomène, il est nécessaire de fixer le temps de chauffage dans le second tube à une durée fixée en fonction de la vitesse de déplacement de la phase la plus rapide dans l'ensemble des équipements comprenant le premier tube, le conduit de liaison et le second tube, et donc de surchauffer la phase liquide. Ceci permet certes de garantir la stérilisation de la phase se déplaçant le plus rapidement dans l'ensemble de l'installation, mais cela se fait au détriment de la préservation des qualités alimentaires et organoleptiques de la phase la plus lente.

Par ailleurs, après le préchauffage, les deux phases entrent dans le tube de stérilisation à des températures différentes, ce qui aggrave le phénomène précité.

La différence de temps de séjour s'explique d'une part par un problème de sédimentation, accentué par une faible viscosité de la phase liquide. À ce titre, jusqu'à très récemment, la plupart des colonnes de chauffage ohmique connues étaient verticales avec une section importante. Afin de limiter le phénomène de sédimentation, plusieurs équipementiers ont récemment mis sur le marché des colonnes de chauffage horizontales avec une très légère pente ascendante dans le sens du flux.

Même si ces améliorations ont permis d'éviter les phénomènes de sédimentation verticale des morceaux dans la phase liquide, une hétérogénéité des temps de séjour des différents composants dans les colonnes de chauffage est encore observée et peut s'expliquer par des phénomènes de mécanique des fluides.

En effet, la dispersion des temps de séjours peut être liée à un écoulement laminaire du produit. Un produit liquide en régime laminaire présente une dispersion des temps de séjours pouvant atteindre 2 dans les liquides newtoniens. En effet, le produit en contact avec les parois a une vitesse quasi nulle alors que celui au coeur de la veine peut aller deux fois plus vite que le débit moyen du liquide. Ce phénomène dans les compositions alimentaires formées d'un mélange hétérogène d'une phase liquide et de particules solides est grandement limité du fait de la teneur importante en morceaux des produits à traiter. On se rapproche alors d'un écoulement dit piston.

Le second phénomène de mécanique des fluides est la « slip velocity ». Dans une suspension de morceaux, le liquide porteur a tendance à aller plus vite que les morceaux qu'il convoie. Ce phénomène entraîne un temps moyen de présence des morceaux plus important que celui du liquide.

Pour répondre à ces inconvénients et notamment afin de permettre un chauffage d'un flux de produit continu, d'uniformiser le temps de séjour des composés du produit alimentaire et de préserver les qualités organoleptiques des produits chauffés par une colonne de chauffage ohmique l'invention concerne, selon son acceptation la plus générale, une Installation de chauffage de produits, notamment d'une composition alimentaire formée d'un mélange hétérogène d'une phase liquide et de particules solides, comprenant au moins une conduite chauffante de section tubulaire en matériaux électriquement isolant et présentant à ses deux extrémités une électrode annulaire, les deux électrodes étant reliées à une source d'alimentation en courant électrique. L'installation de chauffage étant alimentée par une pompe d'alimentation entraînée par un premier moteur caractérisée en ce que ladite pompe d'alimentation débouchant directement dans ledit tube de chauffage, ledit tube de chauffage comprenant une vis sans fin constituée d'un matériau non conducteur, entraînée par un second moteur commandé pour assurer un débit dans la chambre de chauffe.

Avantageusement, la vis sans fin est munie d'un coeur plein servant d'axe de rotation.

Selon un mode de réalisation avantageux, le pas de la vis sans fin est supérieur à deux fois la taille du coté des plus grands morceaux.

Selon une variante, le moteur de la vis sans fin est pourvu d'un variateur de fréquence de sorte à faire varier sa vitesse de rotation.

De préférence, la vis sans fin est constituée d'un matériau plastique non abrasif.

Avantageusement, le produit alimentaire a une viscosité comprise entre 250 et 1500 millipascal/seconde.

Selon une autre variante, le produit alimentaire a une teneur en particule comprise entre 30 et 80%.

Selon un mode de réalisation préféré, le produit alimentaire a une conductivité homogène comportant un écart entre la phase liquide et les particules de 1 à 3.

L'invention sera mieux comprise à la lecture de la description qui suit, se référant aux dessins annexés concernant des exemples non limitatifs de réalisation où :

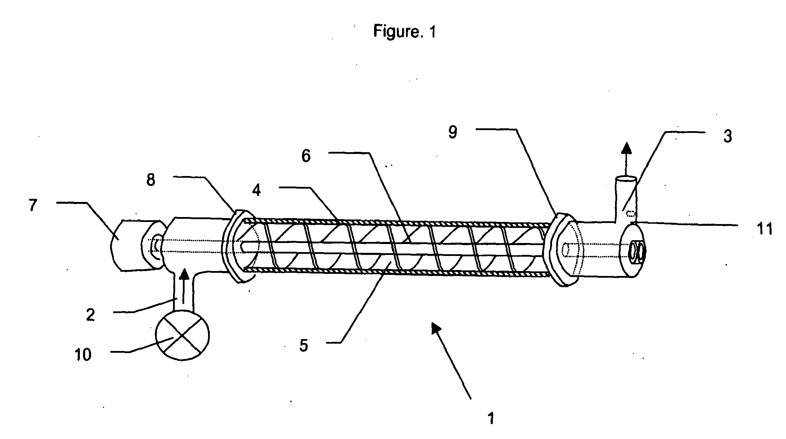

la figure 1 représente une vue schématique d'une installation de chauffage selon la présente invention.
L'installation de chauffage selon l'invention est constituée par un tube creux (1) en un matériau isolant présentant à l'une de ses extrémités un conduit d'alimentation (2) débouchant radialement dans le tube (1), et à l'autre extrémité par un conduit (3) pour la sortie du produit chauffé. La section des conduits d'alimentation et du tube est déterminée de façon à permettre un passage lent dans l'installation, préservant les différents constituants solides.
Le tube (1) enferme une vis sans fin (4) présentant une cannelure hélicoïdale (5) enveloppant un coeur (6) tubulaire.
Le coeur (6) est entraîné par un moteur (7) entraînant la vis en rotation. Ce moteur est commandé par un variateur de fréquence pour permettre un ajustement de la vitesse de rotation de la vis et un asservissement en fonction des variations de températures mesurées à la sortie du tube, et éventuellement d'autres paramètres provenant de capteurs installés sur la chaîne de stérilisation.

Des électrodes annulaires (8, 9) sont prévues en amont et en aval de la vis, afin de produire un chauffage ohmique des matériaux introduits dans le tube.
Ces matériaux sont introduits dans le tube par l'intermédiaire d'une pompe d'alimentation (10) dont le débit est déterminé pour assurer un gavage régulier de la vis sans fin. La pompe d'alimentation (10) est liée directement au tube de chauffage ohmique afin d'éviter toute perte de charge entre la pompe et la vis sans fin. Pour assurer une alimentation régulière et un débit constant à l'intérieur du tube (1), le moteur d'entraînement de la pompe (10) et le moteur d'entraînement (7) de la vis (4) sont commandés de façon synchrone par un circuit de régulation.
Le segment consécutif des cannelures hélicoïdales forme un cloisonnement longitudinal du tube. Ce cloisonnement limite les différences de vitesse de déplacement des différents constituants d'un mélange hétérogène introduit dans le tube. Les particules les plus rapides présentent une vitesse moyenne de déplacement sensiblement égale à la vitesse moyenne des particules les plus lentes, les variations étant limitée par la présence de deux segments consécutifs de la vis.
De ce fait, le chauffage, qui est fonction de l'intensité du courant, de la résistance du composé et du temps de passage dans le tube est constant quelle que soit la nature des constituants.
Le tube comprend une sonde de température (11) placée à proximité de la sortie du tube, délivrant un signal électrique exploité par un circuit régulateur commandant la vitesse de déplacement de la vis.
À titre d'exemple, le diamètre du tube est de 125 millimètres. Le pas de la cannelure hélicoïdale est de 100 millimètres. Il est fonction de la taille des morceaux solides présents dans le mélange à stériliser. De manière optimale, le pas est supérieur à 2L, où L définit la longueur du plus grand morceau. Le pas est préférentiellement compris entre 2L et 4L.
L'alimentation des électrodes est assurée par un courant alternatif présentant une fréquence de 15000 à 30000 hertz et une tension comprise entre 1500 et 5000 volts par mètres. La plage de fonctionnement est comprise entre 20 et 155°C.
La vis est réalisée en un matériau plastique non abrasif.
Plusieurs tubes peuvent être utilisés en série pour procéder par exemple à une stérilisation par palier de température.
Le produit stérilisé est ensuite refroidi à une température de 40°C par passage dans un échangeur à eau froide.
Le produit alimentaire à stériliser dans une telle installation présente une viscosité comprise entre 250 et 1500 millipascal/seconde. La teneur en particules est comprise entre 30 et 80%.
La conductivité est de préférence inférieure à 10 milliSiemens/centimètre et supérieure à 0.01 milliSiemens/centimètre à 25°C.
Dans le cas de morceaux carnés, la conductivité électrique se situe entre 1 milliSiemens/centimètre et 7 milliSiemens/centimètre.

## Revendications

1. Installation de chauffage ohmique de produits, notamment d'une composition alimentaire formée d'un mélange hétérogène d'une phase liquide et de particules solides, comprenant au moins une conduite chauffante de section tubulaire (1) en matériaux électriquement isolant et présentant à ses deux extrémités une électrode annulaire pour produire un chauffage ohmique des produits introduits dans la conduite chauffante, les deux électrodes étant reliées à une source d'alimentation en courant électrique, l'installation de chauffage étant alimentée par une pompe d'alimentation (10) entraînée par un premier moteur **caractérisée en ce que** ladite pompe d'alimentation débouche directement dans ledit tube de chauffage (1), ledit tube de chauffage (1) comprenant une vis sans fin (4) constituée d'un matériau non conducteur, entraînée par un second moteur (7) commandé pour assurer un débit dans la chambre de chauffe.

2. Installation selon la revendication 1 **caractérisée en ce que** la vis sans fin (4) est munie d'un coeur plein servant d'axe de rotation.

3. Installation selon la revendication 1 ou 2, **caractérisée en ce que** le pas de la vis sans fin (4) est supérieur à deux fois la taille du coté des plus grands morceaux.

4. Installation selon l'une des revendications 1 à 3, **caractérisée en ce que** le moteur (7) de la vis sans fin (4) est pourvu d'un variateur de fréquence de sorte à faire varier sa vitesse de rotation.

5. Installation selon l'une des revendications 1 à 4, **caractérisée en ce que** la vis sans fin (4) est constituée d'un matériau plastique non abrasif.

6. Installation selon l'une des revendications 1 à 5, **caractérisée en ce qu'**elle comprend une composition alimentaire ayant une viscosité comprise entre 250 et 1500 millipascal/seconde.

7. Installation selon l'une des revendications 1 à 6, **caractérisée en ce qu'**elle comprend une composition alimentaire ayant une teneur en particule comprise entre 30 et 80%.

8. Installation selon l'une des revendications 1 à 7, **caractérisée en ce qu'**elle comprend une composition alimentaire ayant une conductivité homogène comportant un écart entre la phase liquide et les particules de 1 à 3.

9. Installation selon l'une des revendications 1 à 8, **caractérisée en ce que** le pas de la vis sans fin (4) est compris entre 2L et 4L, où L définit la longueur du plus grand morceau.

10. Installation selon l'une des revendications précédentes **caractérisée en ce que** ledit second moteur est commandé pour assurer un débit dans la chambre de chauffe synchrone avec le débit d'alimentation.

## Claims

1. An apparatus for the ohmic heating of products, more particularly a food composition formed of an heterogeneous mixture of a liquid phase and solid particles, including at least a heating pipe with a tubular section (1) made of electrically insulating materials and both ends having an annular electrode to produce an ohmic heating of the products introduced into the heating pipe, both electrodes being connected to a power supply, the heating device being supplied by a feed pump (10) driven by a first motor, **characterized in that** said feed pump directly opens into said heating tube (1), said heating tube (1) including an endless screw (4) composed of a non conductive material, driven by a second motor (7) controlled to provide an flow rate in the heating chamber.

2. An apparatus according to claim 1, **characterised in that** the endless screw (4) is provided with a solid core used as a rotation axis.

3. An apparatus according to claim 1 or 2, **characterised in that** the thread of the endless screw (4) is greater than twice the size of the side of the largest pieces.

4. An apparatus according to one of claims 1 or 3, **characterised in that** the motor (7) of the endless screw (4) is provided with a frequency variator so that the rotation speed thereof can vary.

5. An apparatus according to one of claims 1 to 4, **characterised in that** the endless screw (4) is composed of a non abrasive plastic material.

6. An apparatus according to one of claims 1 to 5, **characterised in that** it includes a food composition having a viscosity comprised between 250 and 1,500 milliPascal/second.

7. An apparatus according to one of claims 1 to 6, **characterised in that** it includes a food composition having a particle content comprised between 30 and 80%.

8. An apparatus according to one of claims 1 to 7, **characterised in that** it includes a food composition having an homogeneous conductivity including a difference between the liquid phase and the particles from 1 to 3.

9. An apparatus according to one of the preceding claims, **characterised in that** the thread of the endless screw (4) is comprised between 2L and 4L, where L defines the length of the largest piece.

10. An apparatus according to one of the preceding claims, **characterised in that** said second motor is controlled for ensuring a flow rate in the heating chamber synchronous with the supply flow.

## Patentansprüche

1. Widerstandsheizanlage für Produkte, insbesondere für eine Zusammensetzung für Nahrungsmittel, die aus einer heterogenen Mischung einer flüssigen Phase und Festteilchen gebildet wird, die mindestens eine Heizleitung mit rohrförmigem Querschnitt (1) aus elektrisch nichtleitenden Stoffen umfaßt und an ihren beiden Enden eine ringförmige Elektrode für die Erzeugung einer Widerstandsheizung der in die Heizleitung eingeführten Produkte aufweist, wobei die beiden Elektroden an eine Versorgungsquelle für elektrischen Strom angeschlossen sind und die Heizanlage von einer Speisepumpe (10) versorgt wird, die von einem ersten Motor angetrieben wird, **dadurch gekennzeichnet, daß** die besagte Speisepumpe direkt in die besagte Heizleitung (1) führt, wobei die besagte Heizleitung (1) eine Schnecke (4) umfaßt, die aus einem nichtleitenden Material besteht und von einem zweiten Motor (7) angetrieben wird, der so gesteuert wird, daß er einen Durchsatz in der Heizkammer sicherstellt.

2. Anlage nach Anspruch 1, **dadurch gekennzeichnet, daß** die Schnecke (4) mit einem massiven Herzstück versehen ist, das als Drehachse dient.

3. Anlage nach Anspruch 1 oder 2, **dadurch gekennzeichnet, daß** die Teilung der Schnecke (4) größer als das Doppelte der Größe der Seite der größten Stücke ist.

4. Anlage nach einem beliebigen der vorstehenden Ansprüche 1 bis 3, **dadurch gekennzeichnet, daß** der Motor (7) der Schnecke (4) mit einem Frequenzvariator versehen ist, der seine Drehzahl variieren läßt.

5. Anlage nach einem beliebigen der vorstehenden Ansprüche 1 bis 4, **dadurch gekennzeichnet, daß** die Schnecke (4) aus einem nicht abrasiven Kunststoff besteht.

6. Anlage nach einem beliebigen der vorstehenden Ansprüche 1 bis 5, **dadurch gekennzeichnet, daß** sie eine Zusammensetzung für Nahrungsmittel mit einer Viskosität von zwischen 250 und 1.500 Millipascal/Sekunde umfaßt.

7. Anlage nach einem beliebigen der vorstehenden Ansprüche 1 bis 6, **dadurch gekennzeichnet, daß** sie eine Zusammensetzung für Nahrungsmittel mit einem Partikelgehalt von zwischen 30 und 80% umfaßt.

8. Anlage nach einem beliebigen der vorstehenden Ansprüche 1 bis 7, **dadurch gekennzeichnet, daß** sie eine homogene Leitfähigkeit mit einem Abstand zwischen der flüssigen Phase und den Teilchen von 1 zu 3 umfaßt.

9. Anlage nach einem beliebigen der vorstehenden Ansprüche 1 bis 8, **dadurch gekennzeichnet, daß** die Teilung der Schnecke (4) zwischen 2L und 4L beträgt, wobei L die Länge des größten Stücks definiert.

10. Anlage nach einem beliebigen der vorstehenden Ansprüche, **dadurch gekennzeichnet, daß** der besagte zweite Motor so gesteuert wird, daß er in der Heizkammer einen mit dem Versorgungsdurchsatz synchronen Durchsatz sichert.
